# EUROPÄISCHE PATENTSCHRIFT

(11) **EP 2 447 038 B1**
(45) Veröffentlichungstag und Bekanntmachung des Hinweises auf die Patenterteilung: **12.04.2017**
(21) Anmeldenummer: 11186677.8
(22) Anmeldetag: 26.10.2011
(51) Int. Cl.: B29C 49/64, B29C 49/28, B29C 49/78, B29C 49/02, B29C 49/46, B29C 49/36, B29C 49/24, B29C 49/42

(54) **Blasmaschine in Modulbauweise**
Modular blowing machine
Souffleuse en construction modulaire

(30) Priorität: 26.10.2010 DE 102010049385
(43) Veröffentlichungstag der Anmeldung: 02.05.2012
(73) Patentinhaber: Krones AG, 93073 Neutraubling (DE)
(72) Erfinder: Humele, Heinz, 93107 Thalmassing (DE); Voth, Klaus, 93083 Obertraubling (DE); Zimmerer, Johann, 93170 Bernhardswald (DE); Finger, Dieter, 93073 Neutraubling (DE); Seger, Martin, 92318 Neumarkt in der Oberpfalz (DE); Klenk, Christoph, 93173 Wenzenbach (DE); Senn, Konrad, 93059 Regensburg (DE); Winzinger, Frank, 93055 Regensburg (DE); Donhauser, Alexandra, 93047 Regensburg (DE)
(74) Vertreter: Bittner, Bernhard

(56) Entgegenhaltungen:
- DE-B3- 10 259 589
- US-A- 6 134 866

## Beschreibung

Die vorliegende Erfindung bezieht sich auf eine Vorrichtung zum Herstellen von Flüssigkeitsbehältnissen. Derartige Vorrichtungen sind aus dem Stand der Technik seit langem bekannt. Dabei ist es insbesondere bekannt, dass während eines Herstellungsvorganges zunächst Behältnisse, wie beispielsweise Kunststoffbehältnisse, in einem Umformungsvorgang hergestellt und anschließend mit einem Getränk befüllt werden. Abgesehen von diesen Grundgegebenheiten sind jedoch derartige Herstellungsanlagen für Getränkebehältnisse höchst unterschiedlich. So erfordern unterschiedliche Getränke, beispielsweise Mineralwässer oder Säfte stark unterschiedliche Reinheitsgrade bzw. Sterilisierungsstufen. Auch die Art der Etikettierung von Behältnissen ist sehr unterschiedlich und kann beispielsweise durch Anbringen von Selbstklebeetiketten oder auch durch Anbringen von Etiketten mittels Beleimung erfolgen. Weiterhin sind auch die unterschiedlichsten Verfahren bekannt, um die Behältnisse selbst zu sterilisieren. Aus diesem Grunde sind derartige Vorrichtungen stets als Sondermaschinen anzusehen, die damit einen sehr hohen Herstellungsaufwand erfordern.

Aus der bisher noch unveröffentlichten DE 10 2009 041 160.7 ist eine Vorrichtung zum Herstellen von Flüssigkeitsbehältnissen bekannt. Dabei wird vorgeschlagen, dass zwischen dem Abführbereich einer Umformungseinheit und dem Zuführbereich der Fülleinheit eine als Schnittstelle dienende Transporteinrichtung vorgesehen ist, wodurch zwischen der Umformungseinheit und der Fülleinheit eine weitere Einheit zum Behandeln von Kunststoffbehältnissen in die Vorrichtung einfügbar ist. Der Gegenstand der DE 10 2009 041 160.7 wird hiermit durch Bezugnahme vollumfänglich auch zum Gegenstand der vorliegenden Anmeldung gemacht.

Aus dem Stand der Technik sind weiterhin Vorrichtungen bekannt, welche zum Sterilisieren der Kunststoffvorformlinge dienen. So ist beispielsweise aus der DE 10 2008 038 143 eine Vorrichtung bekannt, welche eine Sterilisationseinrichtung aufweist, die ein fließfähiges Medium auf eine Wandung der Kunststoffvorformlinge aufbringt wobei diese Sterilisationseinrichtung auf dem Transportpfad zwischen einer Heizeinrichtung und der Umformungseinrichtung für die Kunststoffvorformlinge vorgesehen ist. Der Gegenstand der DE 10 2008 038 143 wird hiermit ebenfalls durch Offenbarung vollumfänglich zum Gegenstand der vorliegenden Anmeldung gemacht.

Weiterhin sind aus dem Stand der Technik Vorrichtungen bekannt, welche eine gezielte bereichsweise Temperierung der Kunststoffvorformlinge ermöglichen. Die DE 10 2009 021 792.4 wird hiermit ebenfalls durch Bezugnahme vollständig zum Gegenstand der vorliegenden Anmeldung gemacht und beschreibt eine Vorrichtung zum Temperieren von Kunststoffvorformlingen, welche Kontaktierungselemente aufweist, die eine Außenwandung der Kunststoffvorformlinge kontaktieren, um auf diese Weise gezielt ein Temperaturprofil an dieser Außenwandung der Kunststoffvorformlinge zu erzielen.

Zudem zeigen die Druckschriften DE 102 59 589 B3, EP 1 837 157 und US 6 134 866 A jeweils Verfahren zum Herstellen von Artikeln, wie beispielsweise von Hohlkörpern.

Der vorliegenden Erfindung liegt die Aufgabe zugrunde, eine Vorrichtung zur Verfügung zu stellen, welche mit vergleichsweise geringem Aufwand an unterschiedlichste Gegebenheiten wie beispielsweise unterschiedlichste räumliche Gegebenheiten aber auch unterschiedliche Konzeptionierungen angepasst werden kann. Dies wird erfindungsgemäß durch eine Vorrichtung nach Anspruch 1 erreicht. Vorteilhafte Ausführungsformen und Weiterbildungen sind Gegenstand der Unteransprüche.

Eine Vorrichtung zum Herstellen von Kunststoffbehältnissen weist ein Erwärmungsmodul auf, welches Kunststoffvorformlinge erwärmt, wobei das Erwärmungsmodul eine Transporteinrichtung aufweist, welche die Kunststoffvorformlinge während des Erwärmungsvorgangs transportiert. Weiterhin weist die Vorrichtung ein Umformungsmodul zum Umformen der Kunststoffvorformlinge zu Kunststoffbehältnissen auf, welches in einer Transportrichtung der Kunststoffvorformlinge nach der Erwärmungseinrichtung angeordnet ist. Dieses Umformungsmodul weist dabei eine bevorzugt Blaseinrichtung zum Beaufschlagen der Kunststoffvorformlinge mit einem fließfähigen Medium zu deren Expansion auf, sowie eine Transporteinrichtung, welche die Kunststoffvorformlinge während der Expansion transportiert.

Erfindungsgemäß weist das Erwärmungsmodul eine erste Schnittstelle und das Umformungsmodul eine zweite Schnittstelle auf, wobei diese erste Schnittstelle und diese zweite Schnittstelle sowohl eine mechanische Verbindung als auch eine elektrische Verbindung zwischen den durch diese Schnittstelle verbundenen Modulen derart ermöglichen, dass sowohl das Umformungsmodul an dem Erwärmungsmodul angeordnet werden kann als auch zwischen dem Erwärmungsmodul und dem Umformungsmodul wenigstens eine weiteres Modul integrierbar ist, welches die Kunststoffvorformlinge nach dem durch das Erwärmungsmodul erfolgenden Erwärmungsvorgang und vor dem durch das Umformungsmodul erfolgenden Umformungsvorgang behandelt.

Es wird dabei erfindungsgemäß vorgeschlagen, dass eine Vorrichtung zur Verfügung gestellt wird, welche speziell angepasste Schnittstellen aufweist, die problemlos die Integration weiterer Module ermöglichen. Vorzugsweise erlauben dabei diese Schnittstellen eine sogenannte "Plug and Play" - Integration weiterer Module, so dass in möglichst einfacher Weise sowohl eine elektrische Verbindung bzw. eine steuerungstechnische Verbindung hergestellt wird als auch eine mechanische Verbindung, welche den Transport der Kunststoffvorformlinge von dem Erwärmungsmodul zu dem Umformungsmodul erlaubt.

Es ist daher möglich, wahlweise mit oder ohne einem oder mehreren weiteren Modulen zu arbeiten.

Vorteilhaft handelt es sich bei dem Umformungsmodul um eine Streckblasmaschine, welche zusätzlich auch eine Reckstange aufweist, die jeden der Kunststoffvorformlinge in ihrer Längsrichtung während des Umformungsvorgangs dehnt.

Bei einer weiteren vorteilhaften Ausführungsform ist die Transporteinrichtung des Umformungsmoduls als sogenanntes Blasrad ausgebildet, an dem eine Vielzahl von Blasstationen angeordnet ist, innerhalb derer die Kunststoffvorformlinge zu den Kunststoffbehältnissen umgeformt werden.

Bei dem Erwärmungsmodul handelt es sich vorzugsweise um einen Mikrowellenoffen, es wäre jedoch auch möglich, andere Erwärmungseinrichtungen wie Infrarot Erwärmungseinrichtung, STIR - Erwärmungseinrichtungen und dergleichen vorzusehen.

Vorteilhaft sind dabei die Kunststoffvorformlinge vereinzelt an das Umformungsmodul übergebbar.

Das Umformungsmodul kann zusätzlich ein Einlaufrad zum Zuführen der Kunststoffvorformlinge an das Blasrad und/oder ein Auslaufrad zum Abführen der gefertigten Kunststoffbehältnisse aufweisen.

Bei einer bevorzugten Ausführungsform ist eine Transporteinrichtung zwischen dem Erwärmungsmodul und dem Umformungsmodul angeordnet und diese Transporteinrichtung ist als Schnittstelle ausgebildet bzw. weist wenigstens eine der oben erwähnten Schnittstellen auf. Dabei ist diese Transporteinrichtung so ausgebildet, dass zwischen dem Erwärmungsmodul und dem Umformungsmodul das weitere Modul integrierbar ist, wobei ein Transportstrom der Kunststoffbehältnisse zwischen der Umformungseinheit und dem Erwärmungsmodul über die weitere Einheit verläuft.

Bei einer weiteren vorteilhaften Ausführungsform weisen die Schnittstellen jeweils BusSysteme zum Austauschen elektrischer Signale zwischen den durch die Schnittstellen verbundenen Modulen auf. Dabei ist es möglich, dass die Schnittstellen als einheitliche elektrische Schnittstellen zwischen den Modulen und beispielsweise einer Grundmaschine ausgebildet sind. Vorzugsweise erfolgt dabei auch die Spannungsversorgung wenigstens eines Moduls über ein Bus-System. Im Stand der Technik war es bislang üblich, dass die einzelnen Module jeweils eigene Spannungsversorgungen aufwiesen oder dass eine Spannungsversorgung oder auch eine elektrische Verbindung beispielsweise als Kabelführung durch die einzelnen Anlagenteile geschleift wurde.

Bei einer weiteren vorteilhaften Ausführungsform weist jedes Modul eine Steuerungseinrichtung auf, wobei diese Steuerungseinrichtung bevorzugt als speicherprogrammierbare Steuerung SPS ausgebildet ist. Dabei ist es möglich, dass jede SPS auch eine eigene CPU Central Processor Unit aufweist. In diesem Fall ist die "Intelligenz" in dem jeweiligen Modul ausgebildet. Weiterhin wäre es möglich, dass die einzelnen SPS in den Modulen nur über eine Anschaltung oder eine Schaltverbindung verfügen und die " Intelligenz" in der Grundmaschine integriert ist. In diesem Fall befindet sich in den einzelnen Modulen jeweils eine "gesteuerte Hardware".

Vorteilhaft sind alle Komponenten zur Ansteuerung des jeweiligen Modul in dem jeweiligen Modul untergebracht. Dabei kann es sich beispielsweise um Ansteuerungen für Behandlungseinheiten und/oder Servomotoren und/oder Ansteuerungen für Greifelemente, welche zum Greifen der Kunststoffvorformlinge dienen, handeln.

Bei einer weiteren vorteilhaften Ausführungsform weisen die Schnittstellen Ausrichtungseinrichtungen auf, um die mit diesen Schnittstellen verbundenen Module gegeneinander auszurichten. Diese Ausrichteinrichtungen können dabei in der Art eines Zapfens und einer Aufnahme für diesen Zapfen ausgebildet sein, welche eine genaue geometrische Anordnung der mittels dieser Schnittstellen verbundenen Module ermöglichen.

Die Ausrichteinrichtungen sind dabei bevorzugt Bestandteile der Schnittstellen, wobei die Schnittstellen auch mehrteilig ausgebildet sein können. Damit ist hier die gesamte Anlage, wie beispielsweise eine Blasmaschine, mit einer elektrischen und / oder mechanischen Schnittstelle ausgebildet.

Vorteilhaft weist jedes weitere Modul wenigstens eine Schnittstelle auf, um sowohl eine mechanische Verbindung als auch eine elektrische Verbindung mit einem weiteren Modul zu ermöglichen. Vorteilhaft sind dabei die einzelnen Schnittstellen gleichartig ausgebildet.

Vorteilhaft weisen die oben erwähnten Transporteinrichtungen jeweils Antriebseinrichtungen auf sowie eine Steuereinrichtung, welche ebenfalls mit Steuerungseinrichtungen der jeweiligen Module verbindbar sind, um die Transporteinrichtung in die Gesamtanlage auch elektrisch bzw. signaltechnisch einzubinden.

Weiterhin kann die Transporteinrichtung eine Vielzahl von an einem um eine vorgegebene Drehachse drehbaren Träger angeordneten Greifelementen zum Greifen der Behältnisse aufweisen, wobei diese Greifelemente wenigstens teilweise steuerbar sind.

Bei einer weiteren vorteilhaften Ausführungsform ist das weitere Modul aus einer Gruppe von Modulen ausgewählt, welche Sterilisationsmodule, Inspektionsmodule, Transportmodule, Temperiermodule zum Beaufschlagen des Kunststoffvorformlings mit einem sich in dessen Längsrichtung und / oder Umfangsrichtung ändernden Temperaturprofil, Orientierungsmodule zum Orientieren des Kunststoffvorformlings, Kühlmodule, Etikettiermodule für die Kunststoffvorformlinge, Beschichtungsmodule, Reinigungsmodule, Puffermodule, Kombinationen hieraus und dergleichen enthält.

Bevorzugt ist daher zwischen dem Erwärmungsmodul und dem Umformungsmodul ein Temperiermodul oder ein Sterilisationsmodul angeordnet. Daneben wäre es auch möglich, dass in Transportrichtung der Kunststoffvorformlinge bereits vor dem Erwärmungsmodul eine Sterilisationseinrichtung zum Sterilisieren der Kunststoffvorformlinge angeordnet ist und zwischen dem Erwärmungsmodul und dem Umformungsmodul das besagte Temperiermodul. Damit können die vor dem Umformungsmodul liegenden Module in beliebiger Reihenfolge hintereinander angeordnet werden.

Bei einer weiteren vorteilhaften Ausführungsform ist wenigstens ein Modul vorgesehen, welches in einem Arbeitsgang sowohl eine zumindest teilweise Sterilisierung der Kunststoffvorformlinge, als auch eine Beaufschlagung der Kunststoffvorformlinge mit einem sich in deren Längsrichtung und / oder Umfangsrichtung ändernden Temperaturprofil bewirkt. Bei dieser Ausführungsform wird damit die Aufschlagung des Kunststoffvorformlings mit einem sich in Längsrichtung und / oder Umfangsrichtung ändernden Temperaturprofil im Folgenden als Preferential Heating bezeichnet und die Sterilisation in einem Modul untergebracht.

Bei einer weiteren vorteilhaften Ausführungsform sind sowohl die Sterilisation als auch die Temperaturprofilierung der Kunststoffvorformlinge auf einem Behandlungsstern bzw. Behandlungsträger durchführbar. Dies bedeutet, dass die Kunststoffvorformlinge während ihrer Sterilisation und während der Temperaturprofilierung mit der gleichen Transporteinrichtung transportiert werden.

Vorteilhaft sind die einzelnen Maschinen für einen kontinuierlichen Prozess ausgelegt, das heißt, die Transporteinrichtungen transportieren die Kunststoffvorformlinge nicht getaktet, sondern kontinuierlich. Vorteilhaft werden dabei die Kunststoffvorformlinge von einem Modul an ein weiteres Modul stets an der gleichen Position übergeben und besonders bevorzugt ist ein Teilungsabstand der Kunststoffvorformlinge bzw. -flaschen in den jeweiligen Übergabesternen immer einheitlich. So ist es möglich, dass ein Teilungsabstand zumindest im Bereich zwischen dem Erwärmungsmodul und dem Umformungsmodul beibehalten wird.

Es wäre ebenfalls möglich, dass die einzelnen Träger bzw. Greifelemente einer Transporteinrichtung mittels elektrischer Antriebe angetrieben sind. Auf diese Weise ist der Teilungsabstand in Transportrichtung vor bzw. nach jedem Modul über die Steuerungseinrichtung einstellbar. Ein derartiger Transportstern, der hierfür geeignet wäre, wird beispielsweise in der Druckschrift DE10 2006 023 531A1 oder alternativ in der WO 2009 144 664 A1 beschrieben. Denkbar wäre aber auch eine Teilungsabstandsänderung innerhalb eines die Vorformlinge oder die Behälter behandelnden Moduls.

Weiterhin sind vorteilhaft alle elektrischen Komponenten zur Ansteuerung eines Moduls in dem jeweiligen Modul selbst untergebracht. Auf diese Weise können je nach Planung einzelne Module einfach ausgetauscht oder ersetzt werden oder auch bei Bedarf mehrere Module zwischen dem Erwärmungsmodul und dem Umformungsmodul angeordnet werden bzw. sein.

Bei einer weiteren vorteilhaften Ausführungsform weist die Vorrichtung eine Erkennungseinrichtung auf, welche ein an wenigstens einer Schnittstelle angeordnetes Modul erkennt. Dabei ist es möglich, dass beispielsweise über die Schnittstellen oder eine entsprechende Sensorik eine Sterilisationseinrichtung erkannt wird und diese automatisch auch in den Ablauf der Behältnisbehandlung integriert wird. Genauer gesagt, können die entsprechenden Module - vorteilhaft automatisch -erkannt und in die gesamte Maschinensteuerung integriert werden.

Bei einer weiteren vorteilhaften Ausführungsform weist die Vorrichtung eine Anzeigeeinrichtung zur Ausgabe von Informationen auf, welche für das Erwärmungsmodul, das Umformungsmodul und/oder weitere zwischen dem Erwärmungsmodul und dem Umformungsmodul vorhandene Module charakteristisch sind. Auf diese Weise wird eine einheitliche Visualisierung für sämtliche Module zur Verfügung gestellt. Dabei ist es insbesondere möglich, dass jedes Modul in der besagten Visualisierung als eigener Block programmiert ist und die Blöcke sich daher in einfacher Weise zusammenkopieren und einzeln weiter entwickeln lassen.

Bei einer weiteren vorteilhaften Ausführungsform ist ein Reinraum mit einer Eingangsschleuse um das Umformungsmodul und/oder das Sterilisationsmodul angeordnet. Ein weiteres Modul, welches unmittelbar an dem Umformungsmodul oder dem Sterilisationsmodul angeordnet ist bzw. wird weist ebenfalls einen Reinraum auf, welcher konstruktiv so auf den Reinraum des Umformungsmoduls ausgelegt ist, dass eine Reinraumschnittstelle im Wesentlichen gleich ausgebildet ist.

Insbesondere ist die Steuerungseinrichtung auch dazu geeignet unterschiedliche Luftdrücke in unterschiedlichen Modulen zu steuern.

Dies bedeutet, dass bei einer Anbindung der jeweiligen Module aneinander auch Reinraumgrenzen gesetzt oder verändert werden können. So könnte beispielsweise ein das Umformungsmodul umgebender Reinraum bei Hinzufügung eines Sterilisationsmoduls auch dieses Sterilisationsmodul mit einschließen. Bevorzugt ist daher ein Reinraum, der sich um ein weiteres Modul oder zumindest um einen Transportpfad, entlang dessen die Behältnisse mit diesem weiteren Modul transportiert werden, an einen Reinraum des Umformungsmoduls koppelbar. Vorteilhaft ist daher auch eine Kopplungseinrichtung vorgesehen, welche eine im Wesentlichen gasdichte Ankopplung eines Reinraums eines weiteren Moduls an einen Reinraum des Umformungsmoduls erlaubt. Vorteilhaft weist daher wenigstens ein weiteres Modul einen Reinraumabschnitt auf.

Weitere Vorteile und Ausführungsformen ergeben sich aus den beigefügten Zeichnungen:

Darin zeigen:
- Fig. 1: eine schematische Darstellung einer erfindungsgemäßen Vorrichtung zum Behandeln von Behältnissen;
- Fig. 2a, 2b: zwei Darstellungen einer erfindungsgemäßen Vorrichtung mit zusätzlichen Modulen;
- Fig. 3a, 3b: zwei Darstellungen einer Vorrichtung mit einem zwischengeschalteten Modul;
- Fig. 4a - 4d: vier Darstellungen zur Veranschaulichung eines kombinierten Sterilisations- und Konditioniermoduls;
- Fig. 5a - 5b: zwei weitere Darstellungen zur Veranschaulichung der Erfindung;
- Fig. 6a - 6c: drei Darstellungen zur Veranschaulichung des Modulgedankens;
- Fig. 7: eine weitere Darstellung zur Veranschaulichung einer Vorrichtung mit einem zwischengeschalteten Modul; und
- Fig. 8: eine Darstellung zur Veranschaulichung einer weiteren modular aufgebauten Vorrichtung.

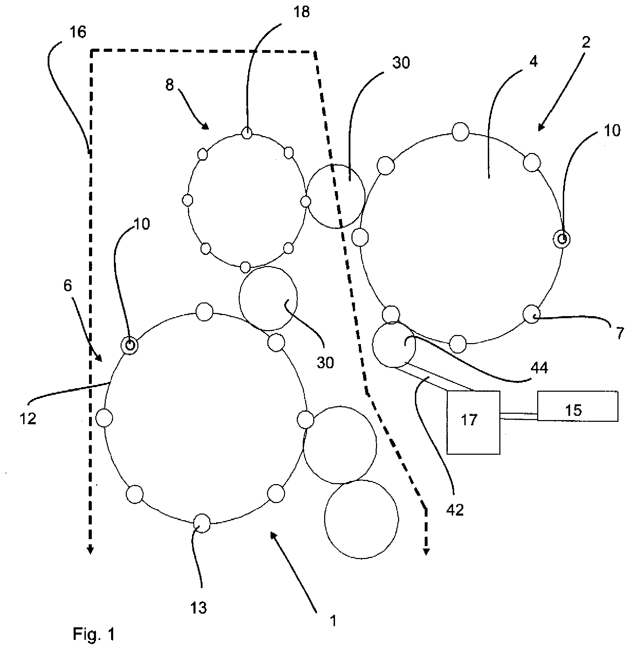

Fig.1 zeigt eine Vorrichtung 1 zum Behandeln von Behältnissen Dabei werden Kunststoffvorformlinge über eine Zuführschiene 42 einem Eintaktrad 44 und einem Erwärmungsmodul 2 zugeführt. Dieses Erwärmungsmodul weist eine Vielzahl von Erwärmungsstationen 7 auf, innerhalb denen die Kunststoffvorformlinge 10 während des Transports mit der Transporteinrichtung 4, welche hier als Heizrad ausgebildet ist, erwärmt werden. Dieses Erwärmungsmodul 2 ist hier als Mikrowellenerwärmungseinrichtung gestaltet, das heißt, die Kunststoffvorformlinge 10 werden mit Mikrowellen beaufschlagt, um so erwärmt zu werden.

Weiterhin wäre es auch möglich, dass während des Transports der Kunststoffvorformlinge mit dem Erwärmungsmodul auch eine Sterilisation der Kunststoffvorformlinge vorgenommen wird. Die Sterilisation, vorzugsweise mittels Wasserstoffperoxid, könnte dann beispielsweise, wie in der Druckschrift DE 10 2008 056 346 A1 offenbart, über einen Kanal innerhalb eines den Vorformling 10 transportierenden Haltedorns (nicht gezeigt) erfolgen. Daneben wäre es auch möglich, dass in diesem Bereich bereits ein sogenanntes Preferential Heating vorgenommen wird, das heißt, eine in Umfangs- und / oder Längsrichtung der Kunststoffvorformlinge variierende Temperierung, wobei es sich hierbei sowohl um eine Kühlung bestimmter Bereiche der Wandung des Kunststoffvorformlings handeln kann als auch um eine Erwärmung dieser Bereiche.

Das Bezugszeichen 30 kennzeichnet eine Transporteinrichtung, welche die Kunststoffvorformlinge an ein weiteres Modul 8 zur Behandlung weitergibt. Dieses weitere Behandlungsmodul 8 weist eine Vielzahl von Behandlungsstationen 18 auf, welche die Kunststoffvorformlinge behandeln. Bei der in Figur 1 gezeigten Ausführungsform werden die Kunststoffvorformlinge mit dem Modul 8 sowohl sterilisiert als auch in der Art des oben beschriebenen Preferential Heating oder Preferential Cooling konditioniert. Das weitere Modul 8 ist hier ebenfalls der rundlaufenden Art.

Über eine weitere Transporteinrichtung 30 wie insbesondere einen Transportstern werden die Kunststoffvorformlinge an das Umformungsmodul 6 übergeben. Dieses Umformungsmodul 6 weist dabei eine Vielzahl von Blasstationen 13 auf, die an einer Transporteinrichtung wie einem Blasrad 12 angeordnet sind. Während des Transports mit der Transporteinrichtung 12 werden die Kunststoffvorformlinge 10 zu Kunststoffbehältnissen expandiert. Damit handelt es sich bei dem Umformungsmodul 6 hier um eine Blaseinrichtung und insbesondere um eine Streckblasmaschine.

Das Bezugszeichen 16 kennzeichnet einen Reinraum bzw. Sterilraum bzw. dessen Grenze. Das bedeutet, dass die erwärmten Kunststoffvorformlinge über eine nicht gezeigte Schleuse in den Sterilraum 16 eingeführt werden. Über in Figur 1 nicht gezeigte Schnittstellen ist dabei das Erwärmungsmodul 2 mit dem weiteren Modul 8 verbunden. Dabei ist es jedoch denkbar, dass, falls gewünscht, auch eine Transporteinrichtung 30 und das Modul 8 entfernt werden könnten und auf diese Weise unmittelbar das Umformungsmodul 6 an das Erwärmungsmodul 2 angebunden wird. Es wäre weiterhin auch denkbar, mehrere Module 8 zwischen dem Erwärmungsmodul 2 und dem Umformungsmodul 6 einzubinden.

Insbesondere ist der Reinraum bei den zu dem Erwärmungs- und Umformungsmodul weiteren Modulen so ausgestaltet, dass dieser ebenfalls in bestehende Anordnungen von Erwärmungs- und Umformungsmodulen integrierbar ist. Mit anderen Worten weist die Verbindungsstelle des Reinraums, also die Abschlusskante der Reinraumwand, von mindestens dem Umformungsmodul im Wesentlichen die gleichen Abmaße auf wie beispielsweise die Abschlusskante der Reinraumwand des Sterilisationsmoduls. Man könnte auch sagen, dass die Reinraumwand zwischen zwei Modulen eine Solltrennstelle zum Entfernen oder Hinzufügen weiterer Module mit weiteren Reinräumen aufweist. Insbesondere sind die Trennstellen mit Dichtungen und/oder Schnellverschlüssen versehen.

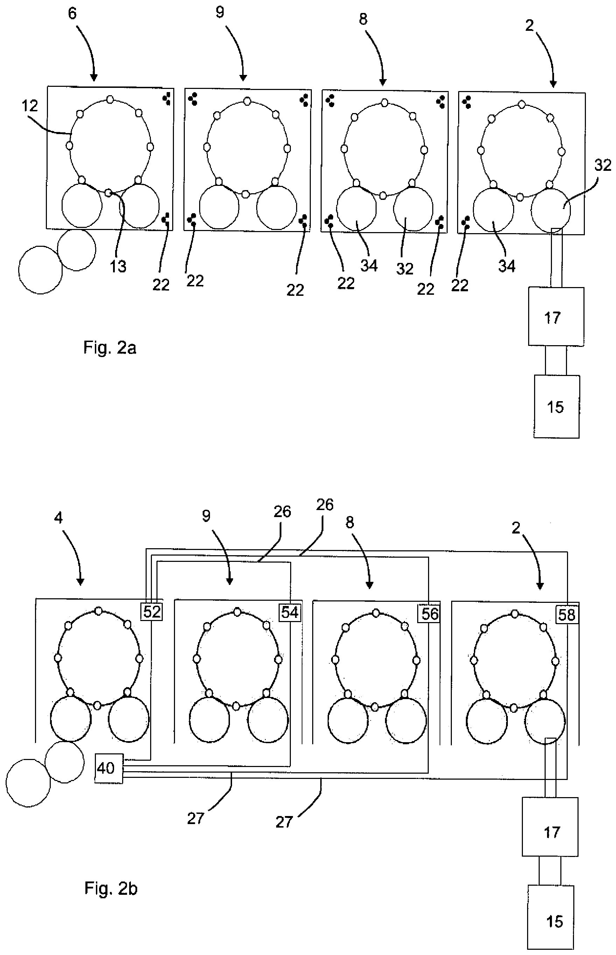

Figur 2a zeigt eine weitere Ausführungsform einer erfindungsgemäßen Vorrichtung 1. Hier ist zwischen dem Erwärmungsmodul 2 und dem Umformungsmodul 6 ein Preferential Heating-Modul 8 angeordnet sowie auch ein Sterilisationsmodul 9. Die Bezugszeichen 22 beziehen sich jeweils auf Schnittstellen, welche die gegenseitige Anbindung der einzelnen Module 2, 8, 9, 6 aneinander erlauben. Diese Schnittstellen 22 sind dabei im Wesentlichen gleichartig ausgebildet, es wäre jedoch auch möglich, dass je 2 Schnittstellen 22 zweier Module, wie in Figur 2a angezeigt, nach dem Stecker-Kupplungssystem zusammenarbeiten.

Diese Schnittstellen 22 stellen dabei insbesondere nicht nur eine mechanische Verbindung zwischen den einzelnen Modulen her bzw. erlauben den Transport der Vorformlinge von einem Modul an das nächste, sondern sie stellen auch eine elektrische bzw. Signalverbindung her. Dies bedeutet, dass die einzelnen Module hier vorzugsweise als Plug & Play-Module ausgeführt werden, dass also bei Verbindung der Schnittstellen sowohl eine mechanische als auch eine elektrische Verbindung hergestellt wird. Im einfachsten Fall ist die mechanische Verbindung ein Bohrbild.

Es wäre jedoch auch möglich, dass die gezeigten Schnittstellen mehrteilig aufgebaut sind. Auch bei der in Figur 2a gezeigten Vorrichtung kann ein Reinraum vorgesehen sein, innerhalb dessen die Kunststoffvorformlinge behandelt werden. Dieser Reinraum kann dabei sämtliche Module umgeben, er kann jedoch auch, wie in Figur 1 gezeigt, zwischen dem Modul 8 und dem Erwärmungsmodul 2 enden. Wie in Figur 2a gezeigt, ist es grundsätzlich möglich, beliebige Module insbesondere auch in beliebigen Reihenfolgen miteinander zu kombinieren. So wäre es beispielsweise möglich, das Modul 8 und das Modul 9 hinsichtlich ihrer Reihenfolge zu vertauschen oder auch beispielsweise das Modul 9 als Sterilisationsmodul für Behältnisse auszuführen und nach dem Modul 6 anzuordnen. Auch könnte das Sterilisationsmodul vor dem Heizmodul 2 angeordnet sein.

Der Reinraum könnte jedoch auch wenigstens abschnittsweise kanalartig um die Transportpfade der Kunststoffvorformlinge ausgebildet sein.

Figur 2b zeigt die signaltechnische Verbindung der jeweiligen Module. Hierbei weist das Umformungsmodul 6 eine Steuerungseinrichtung 52 auf, die hier auch als Leitsteuerung für die Steuerungseinrichtungen 54, 56 und 58 der Module 9, 8 und 2 dient. Der Signalaustausch erfolgt hier über nicht genauer gezeigte Bus-Systeme, das heißt, die einzelnen Steuerungseinrichtungen können über diese Bus-Systeme aneinander angeschlossen werden. Im einfachsten Fall können die Schnittstellen, welche die mechanische Verbindung herstellen, auch Bohrbilder sein, in welche entsprechende Vorsprünge oder Bolzen des jeweils anderen Moduls eingreifen.

Das Bezugszeichen 40 kennzeichnet eine Anzeigeeinrichtung, mit der für einen Benutzer die einzelnen Module visualisiert werden können. Dabei kann die Vorrichtung derart gestaltet sein, dass bei einem Hinzufügen eines Moduls 8 oder 9 und dem jeweiligen Verbinden mit den Verbindungsleitungen 26, 27 auch automatisch dieses betreffende Modul auf der Anzeigeeinrichtung 40 visualisiert werden kann. So ist es möglich, dass in der Software der Anlage hinterlegt ist, dass bei Nachrüstungen bestimmte Funktionen freigeschalten oder hinzuprogrammiert werden.

Bei dem Sterilisationsmodul 9 kann es sich, wie oben erwähnt, um ein Sterilisationsmodul handeln, welches die Behältnisse mit Wasserstoffperoxid H₂O₂ beaufschlagt oder beispielsweise auch mit Elektronenstrahlen. Daneben kann das Sterilisationsmodul auch als UV- Sterilisationsmodul oder Plasma - Sterilisationsmodul ausgebildet sein, welches in Bereichen des Transportwegs oder auch über den gesamten Transportweg der Behältnisse bzw. Kunststoffvorformlinge hinweg angeordnet ist.

Daneben kann es sich bei den weiteren Modulen auch um Messeinrichtungen handeln, wie beispielsweise eine Wanddickenmesseinrichtung oder eine Gewichtsmesseinrichtung. Daneben ist es möglich, dass über eine zentrale Steuerungseinrichtung oder die Steuerungseinrichtung 52 eine Regelung aller Funktionen z.B. Sterilisation, Preferential Heating und dergleichen vorgenommen werden. Auch könnte ein zusätzliches Lasererwärmungsmodul vorgesehen sein.

Daneben könnte es sich bei diesen Modulen auch um Reinigungsmodule für Heizdorne, Blasformen oder Klammern handeln oder auch um Sortiermodule für die Kunststoffvorformlinge. Weiterhin kann die Anlage ein so genanntes CIP-Modul aufweisen (Cleaning-in-Place), welches insbesondere zum Reinigen von Heizdornen, Blasformen, Klammern, der Kunststoffvorformlingssortierung, Reckstangen, Ventilblöcken oder dergleichen dient.

Daneben wäre es möglich, dass zwischen einzelnen Modulen ein Puffersystem vorgesehen ist, wie beispielsweise ein Lufttransport oder dergleichen. Daneben kann die Vorrichtung auch eine Erzeugungseinrichtung 15 für die Kunststoffvorformlinge aufweisen, wie eine Spritzgussmaschine oder auch einen Extruder. Daneben können sich an das Umformungsmodul 6 auch weitere Behandlungseinrichtungen wie Etikettiermaschinen, Sterilisatoren, Rinser, Fülleinrichtungen oder Verschließer anschließen. Das Bezugszeichen 17 kennzeichnet eine Kühleinrichtung für die gefertigten Kunststoffvorformlinge.

Weiterhin wäre es möglich, dass die Vorrichtung Wechseleinrichtungen aufweist, wie beispielsweise eine Maschine zum Wechseln von Blasformen, zum Wechseln von Heizdornen oder auch zum Wechseln von Reckstangen. Daneben kann auch ein Blasdüsenwechselautomat vorgesehen sein, wobei derartige Anlagen hier auch modular über den Umfang des Blasrades 12 verteilt werden können.

Daneben ist es auch möglich, dass eine Vorrichtung zum Etikettieren der Kunststoffvorformlinge vorgesehen ist, wobei eine derartige Vorrichtung beispielsweise im Erwärmungsmodul 2 angeordnet sein kann. Weiterhin kann auch eine zusätzliche Erwärmungseinrichtung für die Kunststoffvorformlinge vorgesehen sein oder auch ein Recyclingmodul. Daneben könnte auch je nach Anforderung ein Wendemodul vorgesehen sein, welches die Kunststoffvorformlinge wendet oder auch eine Inspektionseinrichtung, welche die Erwärmung der Kunststoffvorformlinge kontrolliert, beispielsweise indem ein Wärmebild der Kunststoffvorformlinge aufgenommen wird.

Das Umformungsmodul 12 ist hier als Rundläufer ausgebildet, wobei die einzelnen Blasstationen 13 aber auch stationär angeordnet sein könnten, welche die Kunststoffbehältnisse kontinuierlich oder im Takt transportieren können. Daneben wäre es auch möglich, dass zwar die einzelnen Behandlungsstationen die gleiche Teilung aufweisen, jedoch ein Modul eine höhere Umlaufgeschwindigkeit beispielsweise die doppelte Umlaufgeschwindigkeit hat, sodass nur jeweils jedes zweite Behandlungselement besetzt wird. In diesem Zusammenhang wird auf die internationale Patentanmeldung PCT/EP2010/053023 verwiesen, deren Offenbarungsgehalt hiermit durch Bezugnahme vollständig auch zum Gegenstand der vorliegenden Anmeldung gemacht wird.

Die Transportsterne 32 und 34 sind in den Figuren 2a und 2b der Einfachheit nur schemenhaft angedeutet. Um einen kontinuierlichen Rundlauf zu gewährleisten, kann ein Modul auch nur einen Transportstern 32 für den Einlauf der Behälter 10 in das Modul aufweisen, während der der Auslauf durch einen weiteren Transportstern 32 des in Transportrichtung nächsten Moduls gewährleistet wird, welcher gleichzeitig den Einlaufstern 32 für das nächste Modul bildet. Ebenso kann ein Modul auch nur einen Transportstern 34 für den Auslauf der Behälter 10 aus dem Modul aufweisen, während der Einlauf durch einen weiteren Transportstern 34 des in Transportrichtung vorstehenden Moduls gewährleistet wird, welcher gleichzeitig den Auslaufstern 34 für das vorstehende Modul bildet.

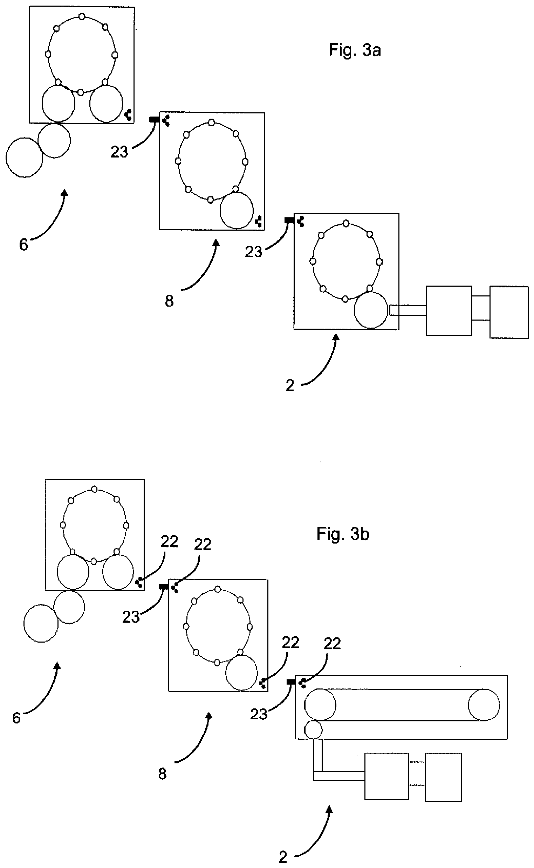

Die Figuren 3a und 3b zeigen zwei weitere Ausgestaltungen einer erfindungsgemäßen Vorrichtung. Hier ist zwischen dem Erwärmungsmodul 2 und dem Umformungsmodul 6 ein weiteres Modul 8, genauer ein Sterilisationsmodul oder ein Preferntial - Heating - Modul zwischengeschaltet. Während bei der in Figur 3a gezeigten Ausführungsform des Erwärmungsmodul 2 als Mikrowellenofen ausgeführt ist, handelt es sich bei dem in Figur 3b gezeigten Erwärmungsmodul 2 um einen Infrarotofen, der die Kunststoffvorformlinge erwärmt.

Das Bezugzeichen 23 kennzeichnet eine Ausrichteinrichtung, welche bei einem Zusammenführen der Module eine gegenseitige Ausrichtung dieser Module zueinander bewirkt. Dabei kann es sich beispielsweise bei der Ausrichteinrichtung 23 um einen Bolzen handeln, der in eine entsprechende (nicht gezeigte) Ausnehmung des jeweils anderen Moduls eingreift. Auf diese Weise können die so verbundenen Module in einer genauen geometrischen Anordnung zueinander aufgestellt werden.

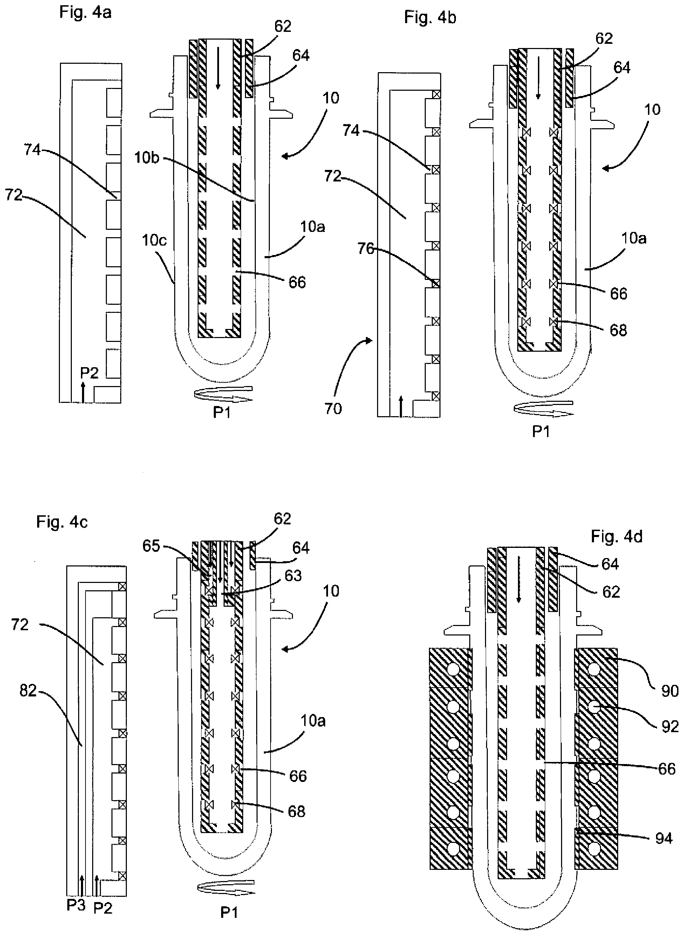

Die Figuren 4a - 4d zeigen vier Darstellungen zur Veranschaulichung einer kombinierten Sterilisation sowie Konditionierung der Kunststoffvorformlinge. Dabei ist bei der in Figur 4a gezeigten Variante ein stangenförmiger Konditionierkörper 62 vorgesehen, der in das Innere des Kunststoffvorformlings 10 einführbar ist. Das Bezugszeichen 64 kennzeichnet einen Haltedorn, der ebenfalls in den Kunststoffvorformling eingreift und diesen von innen an seiner Mündung hält.

Dabei kann dieser Haltedorn auch drehbar ausgeführt sein, sodass eine Drehung des Kunststoffvorformlings wie durch den Pfeil P1 veranschaulicht, durchgeführt werden kann. Der Konditionierkörper 62 weist dabei eine Vielzahl von Öffnungen 66 auf, durch welche ein Sterilisationsmedium auf die Innenwandung 10b des Kunststoffvorformlings aufgebracht werden kann. Das Sterilisationsmittel, bei dem es sich beispielsweise um gasförmiges H₂O₂ oder Peressigsäure handeln kann, wird dabei über die einzelnen Öffnungen 66 auf gezielte Bereiche des Kunststoffvorformlings aufgebracht, so dass gezielt diejenigen Bereiche des Kunststoffvorformlings besprüht werden, die anders temperiert werden sollen. Auch wäre es möglich, dass zunächst sämtliche Bereiche der Innenwandung mit dem Sterilisationsmedium beaufschlagt werden und anschließend bestimmte Bereiche ein zweites Mal, sodass diese entsprechend temperiert werden.

Damit ist hier der Konditionierkörper 62 so ausgeführt, dass gezielt alle Bereiche des Kunststoffvorformlings besprüht werden, die anders temperiert werden sollen. Auch wäre es auf diese Weise möglich, ein Profil in axialer Richtung, d.h. entlang der Längsrichtung L des Kunststoffvorformlings zu erreichen, wobei auch eine Steuerung über die Größe der einzelnen Bohrungen 66 erfolgen könnte.

Das Bezugszeichen 70 kennzeichnet eine weitere Beaufschlagungseinrichtung, welche eine Außenwandung 10c der Kunststoffvorformlinge beaufschlagt. Diese weist ebenfalls eine Vielzahl von Öffnungen 74 auf, die von einem gemeinsamen Kanal 72 versorgt werden und welche die Außenwandung des Kunststoffvorformlings, ggfs. auch mit einem Sterilisationsmittel, beaufschlagen. Dabei kann auch diese Beaufschlagung wiederum genutzt werden, um den Kunststoffvorformling an unterschiedlichen Umfangsbereichen unterschiedlich zu temperieren. Diese unterschiedliche Temperierung kann im nachfolgenden Blasprozess dazu verwendet werden, um nicht rotationssymmetrische Behältnisse, beispielsweise ovale Behältnisse, zu erzeugen. Die stark erwärmten Bereiche werden sich entsprechend stärker dehnen.

Der Konditionierkörper 62 ist dabei vorteilhaft stangenförmig ausgebildet, sodass der Kunststoffvorformling über die ganze Höhe mit dem Wärmeprofil beaufschlagt werden kann.

Weiterhin wäre es auch möglich, in der gezeigten Weise einen besseren Halsabzug für den Kunststoffvorformlinghals zu realisieren. Das Sterilisationsmittel, beispielsweise H₂O₂ , kann sich auch in der flüssigen Phase befinden und kühlt die Bereiche des Kunststoffvorformlings ab, die später einen größeren Streckweg zurücklegen müssen und gleichzeitig wird gezielt das Gewinde und der Tragring gekühlt. Wie gezeigt, können sich die Sterilisationsdüsen außen und innen befinden. Auf diese Weise ist es möglich, den Tragringbereich ein bisschen mehr zu erwärmen und das Material kurz darunter besser zu verstrecken.

Die hier gezeigte Sterilisation der Kunststoffvorformlinge könnte dabei auch noch in einem Mikrowellenofen oder einem herkömmlichen linearen Infrarotofen stattfinden. Dabei könnte eine Regelung vorgesehen sein, bei welcher die einzelnen Umfangsbereiche mit einem Temperatursensor abgefragt werden und der Sprühdruck daraufhin geregelt wird. Das Bezugszeichen 10a kennzeichnet einen Grundkörper des Kunststoffvorformlings.

Bei der in Figur 4b gezeigten Darstellung sind zusätzlich Ventile 68, 76 vorgesehen, mit denen der Austritt des Sterilisationsmediums über die einzelnen Öffnungen 66 separat geregelt werden kann. Der Haltedorn 64 ist dabei vorzugsweise auch schrittweise drehbar. Bei kleinen Vorformlingen10 ist es unter Umständen nur möglich, auf einer Seite Ventile 66, 68 anzuordnen, deswegen ist eine Rotation umso wichtiger.

Bei der in Figur 4c gezeigten Ausführungsform sind zwei Zuführwege 72 und 82 für das Sterilisationsmedium vorgesehen. Dabei kann in einem oberen Bereich über den Zuführweg 82 kaltes Sterilisationsmediums zugeführt werden und über den Zuführbereich 72 wärmeres. Auch auf diese Weise kann die Mündung des Behältnisses gekühlt, bzw. nicht so heiß sterilisiert werden, dass sie sich noch weiter erwärmt.

Auch in den Konditionierkörper 62 sind dabei zwei separate Zuführwege 63, 65 vorgesehen, wobei der Zuführweg 63 für die unteren Öffnungen und der Zuführweg 65 für die oberen Öffnungen vorgesehen ist.

Figur 4d zeigt eine weitere Ausführungsform, wobei hier ebenfalls ein Konditionierdorn 62 mit mindestens einer Öffnung 66 vorgesehen ist sowie auch ein Haltedorn 64, der optional auch den Kunststoffvorformling drehen kann. Weiterhin ist hier eine (insbesondere klammerartig ausgeführte) Beaufschlagungseinrichtung 90 vorgesehen, welche eine Außenwand des Kunststoffvorformlings abschnittsweise berühren kann, um diese Bereiche zu temperieren und insbesondere zu kühlen. Dabei können hier elektrische Heizeinrichtungen vorgesehen sein oder auch Temperiermittelkanäle 92, um die Beaufschlagungseinrichtung 90 bzw. die einzelnen Kontaktierflächen 94 zu temperieren. Man erkennt hier, dass der Kunststoffvorformling in seiner Längsrichtung L an einigen Bereichen anders temperiert wird wie an anderen Bereichen. Auch auf diese Weise ist es möglich, den Kunststoffvorformling im anschließenden Prozess an einigen Stellen stärker und an anderen Stellen weniger stark zu verstrecken. In anderen Worten stellt die Vorrichtung nach Figur 4d eine gleichzeitige Sterilisation und Temperaturprofilierung eines Vorformlings 10, insbesondere mittels Kontaktierungselementen 90, 94, zur Verfügung. Insbesondere ist die Sterilisation mittels eines Dorns von innen und die Profilierung an der Außenseite des Vorformlings 10 durchführbar.

Ebenfalls wäre es denkbar, zwei Sterilisationsmodule vorzusehen, wobei eines zum Transport der Vorformlinge 10 Dorne 64 zum Innengreifen der Vorformlinge aufweist und das andere Greifklammern als Außengreifer, um die gesamte Fläche des Vorformlings 10 sterilisieren zu können.

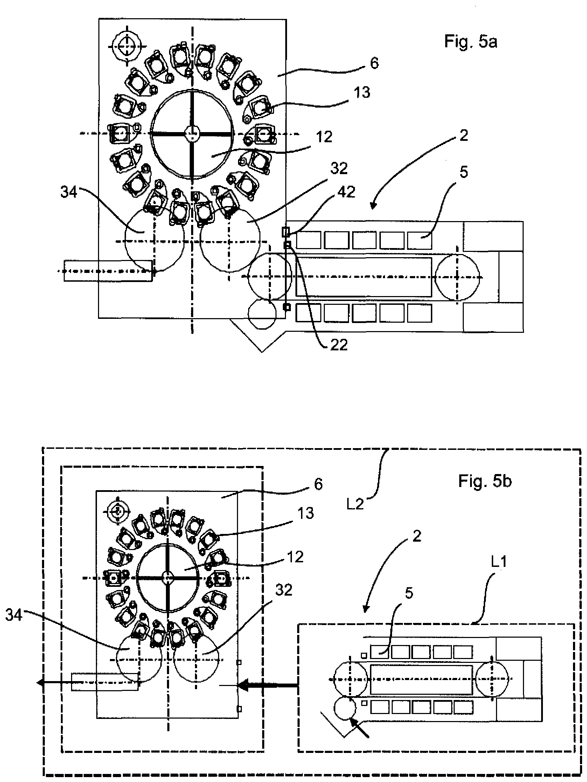

Die Figuren 5a und 5b zeigen 2 weitere Ausgestaltungen einer erfindungsgemäßen Vorrichtung. Bei der in Figur 5a gezeigten Ausführungsform ist ein Erwärmungsmodul 2 unmittelbar an ein Umformungsmodul 6 angebunden. Damit besteht hier die gesamte Vorrichtung 1 aus zwei Modulen, die mit den Schnittstellen 22 miteinander verbunden sind, wobei diese Verbindung trennbar ist. Das Bezugszeichen 42 bezieht sich auf ein Bus-System, mit dem die elektrischen Verbindungen ebenfalls herstellbar sind. Auch steuerungstechnisch werden so die beiden Module 2,6 miteinander verbunden.

Bei der in Figur 5b gezeigten Darstellung sind die einzelnen Schnittstellen 22 jeweils dargestellt und die gestrichelten Linien L1 und L2 zeigen jeweils die Systemgrenze des Erwärmungsmoduls 2 bzw. des Umformungsmoduls 6 an. Das Bezugszeichen 32 in den Figuren 5a und 5b kennzeichnet ein Zuführrad bzw. einen Einlaufstern, der die Kunststoffvorformlinge dem Blasrad zuführt und das Bezugszeichen 34 ein Abführrad bzw. einen Auslaufstern, der die hergestellten Behältnisse von dem Blasrad abführt. Diese Einlauf- und Auslaufsterne sind dabei bevorzugt Bestandteile der jeweiligen Module. Dabei können diese Einlauf und Auslaufsterne 32, 34 auch jeweils eigene Servomotoren zum Antrieb aufweisen, diese Motoren werden jedoch vorteilhaft von den Steuerungseinrichtungen der Module mitgesteuert. Das Bezugszeichen 5 bezieht sich auf ein Heizelement des Erwärmungsmoduls 2.

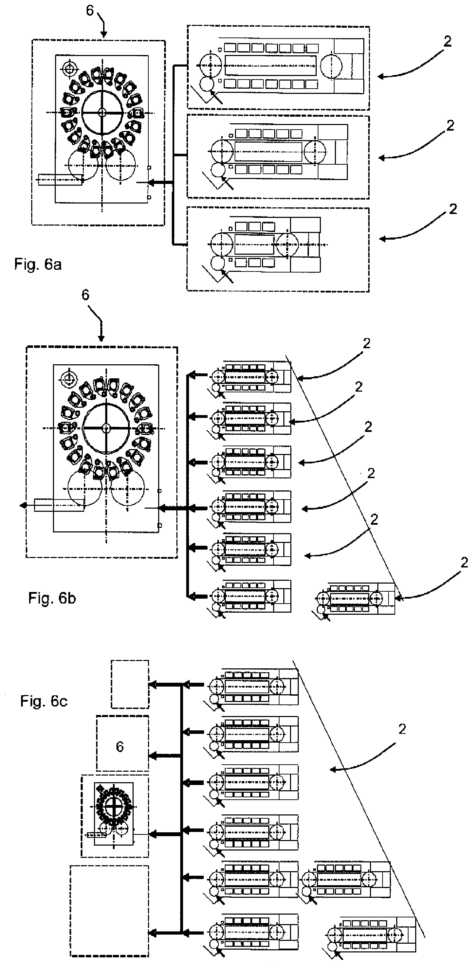

In Figur 6a ist veranschaulicht, dass ein bestimmtes Umformungsmodul 6 je nach Kundenwunsch mit unterschiedlichen Erwärmungsmodulen 2 gekoppelt werden kann, da die oben erwähnten Schnittstellen 22 jeweils genormt sind. Die gleiche Vorgehensweise ist in Figur 6b für eine andere Anzahl von Erwärmungsmodulen dargestellt. Dabei können die unterschiedlichen Erwärmungsmodule 2 eine unterschiedliche Anzahl von Heizelementen 5 aufweisen. Unter Heizelementen 5 werden insbesondere Infrarotheizkästen verstanden, in denen eine gewisse Anzahl von Infrarotlampen angeordnet sind. Bei einem Mikrowellenofen können die Heizelemente auch Resonatoren darstellen. Allgemein kann man auch von Heizkammern sprechen, die zur individuellen Erwärmung von einzelnen Vorformlingen 10 dienen.

Figur 6c veranschaulicht, dass es im Prinzip möglich ist, beliebige Erwärmungsmodule 2 mit beliebigen Umformungsmodulen 6 über die jeweils genormten Schnittstellen zu koppeln. So könnte beispielsweise das oberste in Figur 6c dargestellte Umformungsmodul mit jedem der einzelnen gezeigten Erwärmungsmodule 2 gekoppelt werden.

Es wäre auch denkbar, zwei Erwärmungsmodule 2 einem Umformungsmodul 6 zuzuordnen. Hierfür können auch zwei Schnittstellen pro Umformungsmodul 6 vorgesehen sein. Ebenfalls könnten zwei gleich- oder verschiedenartige Erwärmungsmodule 2 seriell hintereinander mittels einer Schnittstelle 22 gekoppelt werden.

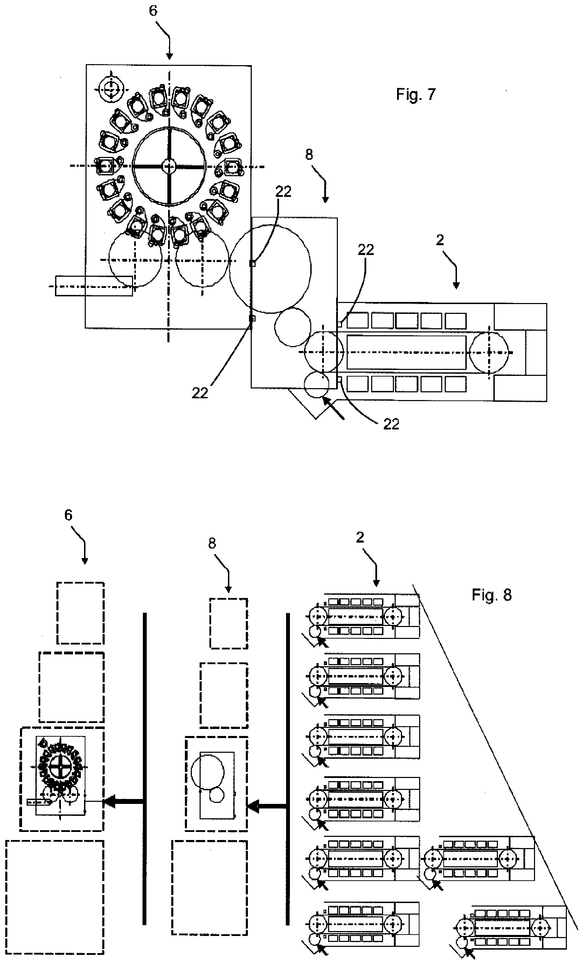

Figur 7 zeigt, ähnlich wie die Figuren 3a und 3b, eine Streckblasmaschine mit einem Zwischenmodul 8, wobei die einzelnen Module hier über die dargestellten Schnittstellen 22 miteinander verbunden sind.

Wie sich aus Figur 8 ergibt, ist es weiterhin auch möglich, beliebige Erwärmungsmodule 2 mit beliebigen Zwischenmodulen 8 an beliebige Umformungsmodule 6 anzubinden. Bevorzugt ist dabei jeweils das Umformungsmodul 6 als Leitmodul mit einer zentralen Steuerung ausgeführt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Erwärmungsmodul
- 5: Heizelement
- 6: Umformungsmodul
- 7: Erwärmungsstation
- 8: Preferential - Heating - Modul
- 9: Sterilisationsmodul
- 10: Kunststoffvorformlinge
- 10a: Grundkörper der Kunststoffvorformlinge
- 10b: Innenwandung der Kunststoffvorformlinge
- 10c: Außenwandung der Kunststoffvorformlinge
- 12: Blasrad
- 13: Blasstationen
- 15: Erzeugungseinrichtung
- 17: Kühleinrichtung
- 18: Behandlungsstationen
- 22: Schnittstelle
- 26, 27: Verbindungsleitungen
- 30: Transporteinrichtung
- 32: Zuführeinrichtung, Einlaufstern
- 34: Abführeinrichtung, Auslaufstern
- 40: Anzeigeeinrichtung
- 52: Steuerungseinrichtung
- 54, 56, 58: Steuerungseinrichtungen der weiteren Module
- 62: Kontaktierungskörper
- 63,65: Zuführwege
- 64: Haltedorn
- 66: Öffnungen
- 70: weitere Beaufschlagungseinrichtung

## Patentansprüche

1. Vorrichtung (1) zum Herstellen von Kunststoffbehältnissen mit einem Erwärmungsmodul (2), welches Kunststoffvorformlinge (10) erwärmt, wobei das Erwärmungsmodul (2) eine Transporteinrichtung (4) aufweist, welche die Kunststoffvorformlinge (10) während des Erwärmungsvorgangs transportiert, mit einem Umformungsmodul (6) zum Umformen der Kunststoffvorformlinge (10) zu Kunststoffbehältnissen, welches in einer Transportrichtung der Kunststoffvorformlinge (10) nach der Erwärmungseinrichtung (2) angeordnet ist, und welches Umformungsmodul (6) eine Blaseinrichtung zum Beaufschlagen der Kunststoffvorformlinge mit einem fließfähigen Medium zu deren Expansion sowie eine Transporteinrichtung (12), welche die Kunststoffvorformlinge (10) während deren Expansion transportiert, aufweist,
**dadurch gekennzeichnet, dass**
das Erwärmungsmodul (2) eine erste Schnittstelle (22) und das Umformungsmodul (6) eine zweite Schnittstelle (22) aufweist, wobei diese erste Schnittstelle (22) und diese zweite Schnittstelle (22) sowohl eine mechanische Verbindung als auch eine elektrische Verbindung zwischen den durch diese Schnittstelle verbundenen Modulen derart ermöglichen, dass sowohl das Umformungsmodul (6) an dem Erwärmungsmodul (6) angeordnet werden kann als auch zwischen dem Erwärmungsmodul (2) und dem Umformungsmodul (6) wenigstens ein weiteres Modul (8, 9) integrierbar ist, welches die Kunststoffvorformlinge (10) nach dem durch das Erwärmungsmodul (2) erfolgenden Erwärmungsvorgang und vor dem durch das Umformungsmodul (6) erfolgenden Umformungsvorgang behandelt.

2. Vorrichtung (1) nach Anspruch 1,
**dadurch gekennzeichnet, dass**
die Schnittstellen (22) jeweils Bussysteme (42) zum Austauschen elektrischer Signale zwischen den durch die Schnittstellen verbundenen Module aufweisen.

3. Vorrichtung (1) nach Anspruch 2,
**dadurch gekennzeichnet, dass**
die Spannungsversorgung wenigstens eines Moduls (2, 6, 8) über ein Bussystem (42) erfolgt.

4. Vorrichtung (1) nach wenigstens einem der vorangegangenen Ansprüche,
**dadurch gekennzeichnet, dass**
jedes Modul (2, 6) eine Steuerungseinrichtung (58, 52) aufweist, wobei diese Steuerungseinrichtungen bevorzugt als speicherprogrammierbare Steuerungen (SPS) ausgebildet sind.

5. Vorrichtung (1) nach wenigstens einem der vorangegangenen Ansprüche,
**dadurch gekennzeichnet, dass**
jedes weitere Modul (8) wenigstens eine Schnittstelle (22) aufweist, um sowohl eine mechanische Verbindung als auch eine elektrische Verbindung mit einem weiteren Modul (2, 6) zu ermöglichen.

6. Vorrichtung (1) nach wenigstens einem der vorangegangenen Ansprüche,
**dadurch gekennzeichnet, dass**
die Schnittstellen (22) Ausrichtungseinrichtungen (23) aufweisen, um die mit diesen Schnittstellen verbundenen Module (2, 6) gegenüber einander auszurichten.

7. Vorrichtung (1) nach wenigstens einem der vorangegangenen Ansprüche,
**dadurch gekennzeichnet, dass**
das weitere Modul (8) aus einer Gruppe von Modulen (8) ausgewählt ist, welche Sterilisationsmodule, Inspektionsmodule, Transportmodule, Temperiermodule zum Beaufschlagen des Kunststoffvorformlings mit einem sich in dessen Längsrichtung und/oder Umfangsrichtung ändernden Temperaturprofil, Orientierungsmodule zum Orientieren des Kunststoffvorformlings, Kühlmodule, Etikettiermodule für Kunststoffvorformlinge, Beschichtungsmodule, Reinigungsmodule, Puffermodule, Kombinationen hieraus und dergleichen enthält.

8. Vorrichtung (1) nach Anspruch 1,
**dadurch gekennzeichnet, dass**
wenigstens ein weiteres Modul (8) ein Modul ist, welches in einem Arbeitsgang sowohl eine zumindest teilweise Sterilisierung der Kunststoffvorformlinge (10) als auch eine Beaufschlagung der Kunststoffvorformlinge (10) mit einem sich in dessen Längsrichtung und/oder Umfangsrichtung ändernden Temperaturprofil aufweist.

9. Vorrichtung nach Anspruch 8, **dadurch gekennzeichnet, dass** die Sterilisation als auch die Temperaturprofilierung auf einem Behandlungsstern durchführbar ist.

10. Vorrichtung (1) nach wenigstens einem der vorangegangenen Ansprüche,
**dadurch gekennzeichnet, dass**
die einzelnen Schnittstellen (22) gleichartig ausgebildet sind

11. Vorrichtung (1) nach wenigstens einem der vorangegangenen Ansprüche,
**dadurch gekennzeichnet, dass**
die Vorrichtung (1) eine Erkennungseinrichtung aufweist, welche ein an wenigstens einer Schnittstelle (22) angeordnetes weiteres Modul erkennt.

12. Vorrichtung (1) nach wenigstens einem der vorangegangenen Ansprüche,
**dadurch gekennzeichnet, dass**
die Vorrichtung (1) eine Anzeigeeinrichtung (40) zur Ausgabe von Informationen ausweist, welche für das Erwärmungsmodul (2), das Umformungsmodul (6) und wenigstens ein weiteres zwischen dem Erwärmungsmodul (2) und dem Umformungsmodul (6) vorhandenes Modul (8) charakteristisch sind.

13. Vorrichtung (1) nach wenigstens einem der vorangegangen Ansprüche, **dadurch gekennzeichnet, dass** das Umformungsmodul (6) und/oder das Sterilisationsmodul 8 einen Reinraum aufweist, welcher eine Reinraumschnittstelle zu einem weiteren Modul bildet.

## Claims

1. An apparatus (1) for producing plastic containers, comprising a heating module (2) that heats plastic preforms (10), said heating module (2) including a transport unit (4) that transports the plastic preforms (10) during the heating process, including a moulding module (6) for moulding the plastic preforms (10) into plastic containers, said moulding module being disposed downstream of the heating unit (2) in the transport direction of the plastic preforms (10) and said moulding module (6) including a blow moulding unit for applying a flowable medium onto the plastic preforms for the expansion thereof as well as a transport unit (12) that transports the plastic preforms (10) during the expansion thereof,
**characterised in that**
the heating module (2) includes a first interface (22) and the moulding module (6) includes a second interface (22), said first interface (22) and said second interface (22) allowing both a mechanical connection and an electric connection between the modules connected by said interfaces in such a way that it is possible both to dispose the moulding module (6) on the heating module (2) and to integrate at least one further module (8, 9) between the heating module (2) and the moulding module (6), which at least one further module treats the plastic preforms (10) following the heating process carried out by the heating module (2) and prior to the moulding process carried out by the moulding module (6).

2. The apparatus (1) as claimed in claim 1,
**characterised in that**
the interfaces (22) respectively include bus systems (42) for exchanging electric signals between the modules connected by the interfaces.

3. The apparatus (1) as claimed in claim 2,
**characterised in that**
the voltage supply of at least one module (2, 6, 8) is effected via a bus system (42).

4. The apparatus (1) as claimed in at least one of the preceding claims,
**characterised in that**
each module (2, 6) includes a control unit (58, 52), said control units being preferably implemented as a programmable logic controller (PLC).

5. The apparatus (1) as claimed in at least one of the preceding claims,
**characterised in that**
each further module (8) includes at least one interface (22) in order to enable both a mechanical connection and an electric connection to a further module (2, 6).

6. The apparatus (1) as claimed in at least one of the preceding claims,
**characterised in that**
the interfaces (22) have alignment units (23) in order to align the modules (2, 6) connected by these interfaces in relation to each other.

7. The apparatus (1) as claimed in at least one of the preceding claims,
**characterised in that**
the further module (8) is selected from a group of modules (8) consisting of sterilisation modules, inspection modules, transport modules, tempering modules for applying a temperature profile to the plastic preforms, which temperature profile changes in the longitudinal direction and/or the circumferential direction thereof, orientation modules for orientating the plastic preform, cooling modules, labelling modules for plastic preforms, coating modules, cleaning modules, buffer modules, combinations thereof and the like.

8. The apparatus (1) as claimed in claim 1,
**characterised in that**
at least one further module (8) is a module which carries out in one process both an at least partial sterilisation of the plastic preforms (10) and an application of the temperature profile on the plastic preforms (10), which temperature profile changes in the longitudinal direction and/or the circumferential direction thereof.

9. The apparatus as claimed in claim 8,
**characterised in that**
both the sterilisation and the temperature profiling can be carried out on a treatment star wheel.

10. The apparatus (1) as claimed in at least one of the preceding claims,
**characterised in that**
the individual interfaces (22) are implemented to be of the same type.

11. The apparatus (1) as claimed in at least one of the preceding claims,
**characterised in that**
the apparatus (1) includes a detection unit which detects a further module disposed on at least one interface (22).

12. The apparatus (1) as claimed in at least one of the preceding claims,
**characterised in that**
the apparatus (1) includes a display unit (40) for outputting information that is characteristic for the heating module (2), the moulding module (6) and at least one further module (8) that may be present between the heating module (2) and the moulding module (6).

13. The apparatus (1) as claimed in at least one of the preceding claims,
**characterised in that**
the moulding module (6) and/or the sterilisation module (8) include(s) a clean room that forms a clean room interface to a further module.

## Revendications

1. Dispositif (1) de fabrication de récipients en matière plastique comprenant un module de chauffage (2), lequel chauffe des ébauches en matière plastique (10), dans lequel le module de chauffage (2) comprend un système de transport (4), lequel transporte les ébauches en matière plastique (10) pendant la procédure de chauffage, un module de façonnage (6) destiné à transformer les ébauches en matière plastique (10) en récipients en matière plastique, lequel étant agencé en aval du système de chauffage (2) dans une direction de transport des ébauches en matière plastique (10), et lequel module de façonnage (6) comprend un système de soufflage destiné à soumettre les ébauches en matière plastique à l'effet d'un milieu coulant pour son expansion ainsi qu'un système de transport (12), lequel transporte les ébauches en matière plastique (10) pendant leur expansion,
**caractérisé en ce que**
le module de chauffage (2) comprend une première interface (22) et le module de façonnage (6) comprend une deuxième interface, dans lequel cette première interface (22) et cette deuxième interface (22) permettent aussi bien une liaison mécanique qu'une liaison électrique entre les modules reliés par cette interface, de telle manière que le module de façonnage (6) peut être agencé sur le module de chauffage (6) et qu'au moins un autre module (8, 9), lequel traite les ébauches en matière plastique (10) après la procédure de chauffage en train d'être réalisée par le module de chauffage (2) et avant la procédure de façonnage en train d'être réalisée par le module de façonnage (6), peut être intégré entre le module de chauffage (2) et le module de façonnage (6).

2. Dispositif (1) selon la revendication 1,
**caractérisé en ce que**
les interfaces (22) comprennent chacune des systèmes de bus (42) permettant l'échange de signaux électriques entre les modules reliés par les interfaces.

3. Dispositif (1) selon la revendication 2,
**caractérisé en ce que**
l'alimentation en tension d'au moins un module (2, 6, 8) est réalisée par un système de bus (42).

4. Dispositif (1) selon au moins l'une des revendications précédentes,
**caractérisé en ce que**
chaque module (2, 6) comprend un système de commande (58, 52), dans lequel ces systèmes de commande sont réalisés de préférence sous la forme de contrôleurs logiques programmables (PLC).

5. Dispositif (1) selon au moins l'une des revendications précédentes,
**caractérisé en ce que**
chaque autre module (8) comprend au moins une interface (22), afin de permettre aussi bien une liaison mécanique qu'une liaison électrique avec un autre module (2, 6).

6. Dispositif (1) selon au moins l'une des revendications précédentes,
**caractérisé en ce que**
les interfaces (22) comprennent des systèmes d'orientation (23), afin d'orienter les uns par rapport aux autres les modules (2, 6) reliés à ces interfaces.

7. Dispositif (1) selon au moins l'une des revendications précédentes,
**caractérisé en ce que**
l'autre module (8) est sélectionné à partir d'un groupe de modules (8), lequel contient des modules de stérilisation, des modules d'inspection, des modules de transport, des modules de thermorégulation permettant de soumettre l'ébauche en matière plastique à l'effet d'un profil de température variant dans la direction longitudinale et/ou la direction périphérique de ladite ébauche, des modules d'orientation permettant d'orienter l'ébauche en matière plastique, des modules de refroidissement, des modules d'étiquetage pour les ébauches en matière plastique, des modules de revêtement, des modules de nettoyage, des modules d'amortissement, les combinaisons et analogues de ces derniers.

8. Dispositif (1) selon la revendication 1,
**caractérisé en ce que**
au moins un autre module (8) est un module qui comprend au cours d'une procédure de travail aussi bien une stérilisation au moins partielle des ébauches en matière plastique (10) qu'une soumission des ébauches en matière plastique (10) à l'effet d'un profil de température variant dans la direction longitudinale et/ou la direction périphérique de celles-ci.

9. Dispositif (1) selon la revendication 8, **caractérisé en ce que** la stérilisation ainsi que le profilage des températures peuvent être effectués sur une roue à étoile de traitement.

10. Dispositif (1) selon au moins l'une des revendications précédentes,
**caractérisé en ce que**
les interfaces (22) individuelles sont de structure similaire.

11. Dispositif (1) selon au moins l'une des revendications précédentes,
**caractérisé en ce que**
le dispositif (1) comprend un système de détection, lequel détecte un autre module agencé sur au moins une interface (22).

12. Dispositif (1) selon au moins l'une des revendications précédentes,
**caractérisé en ce que**
le dispositif (1) comprend un système d'affichage (40) permettant de délivrer des informations, lesquelles sont caractéristiques du module de chauffage (2), du module de façonnage (6) et d'au moins un autre module (8) présent entre le module de chauffage (2) et le module de façonnage (6).

13. Dispositif (1) selon au moins l'une des revendications précédentes, **caractérisé en ce que** le module de façonnage (6) et/ou le module de stérilisation (8) comprennent une salle blanche, laquelle forme une interface de salle blanche avec un autre module.
